# EUROPEAN PATENT SPECIFICATION

(11) **EP 3 294 645 B1**
(45) Date of publication and mention of the grant of the patent: **03.07.2019**
(21) Application number: 16724973.9
(22) Date of filing: 13.05.2016
(51) Int. Cl.: B65D 85/68, B60P 3/08

(54) **VEHICLE BODY CARRIER AND METHOD OF LOADING A VEHICLE BODY ONTO SUCH A CARRIER**
FAHRZEUGKAROSSERIETRÄGER UND VERFAHREN ZUM LADEN EINER FAHRZEUGKAROSSERIE AUF SOLCH EINEN TRÄGER
PORTEUR DE CAISSE DE VÉHICULE ET PROCÉDÉ DE CHARGEMENT D'UNE CAISSE DE VÉHICULE SUR UN TEL PORTEUR

(30) Priority: 15.05.2015 ZA 201503431
(43) Date of publication of application: 21.03.2018
(73) Proprietor: Kar-Tainer International Ltd., Sarasota, Florida 34243 (US)
(72) Inventor: COX, Richard, Dawson, Sarasota, Florida 34243 (US)
(74) Representative: Nederlandsch Octrooibureau
(86) International application number: PCT/IB2016/052761
(87) International publication number: WO 2016/185338

(56) References cited:
- CN-A- 103 786 998
- CN-U- 201 506 574
- DE-U1-202010 009 806
- US-A- 5 547 333

## Description

### FIELD OF THE INVENTION

This invention relates to a vehicle body carrier. More particularly, but not exclusively, this invention relates to a vehicle body carrier for transporting vehicle bodies and/or loading vehicle bodies into intermodal containers. This invention also relates to a method of loading a vehicle body onto a vehicle body carrier.

### BACKGROUND TO THE INVENTION

It is well known to transport vehicles from one location to another by loading such vehicles in intermodal containers. By fully enclosing vehicles in intermodal containers, they are better protected against adverse environmental conditions and damage.

When utilizing intermodal containers, it is important to maximize the space usage inside the containers in order to reduce transportation costs. A widely used method of loading intermodal containers utilises a vehicle carrier that permits a first vehicle to be loaded onto the carrier in a generally horizontal orientation, and a second vehicle to also be loaded onto the carrier, but wherein it is supported in an inclined orientation above one end of the first vehicle. By following method, two standard vehicles could easily be loaded inside a 6 meter long container and the internal height of the container is utilized. Such known vehicle carrier usually includes a pair of spaced apart tracks onto which the first vehicle is driven, and a pair of spaced apart ramps onto which the second vehicle is driven.

Sometimes it is desired for parts of vehicles or semi-knocked-down vehicles, for example vehicle bodies, to be transported from location to another, for example, during the vehicle manufacturing or assembly stages. The vehicle carrier of the kind described above is not suitable for such applications as the vehicle bodies cannot be driven onto carrier. A two part carrier assembly for vehicle according to the preamble of claim 1 is shown in CN103786998 A.

### OBJECT OF THE INVENTION

It is accordingly an object of the invention to provide a vehicle body carrier and method of loading vehicles onto a vehicle body carrier that will, at least partially, alleviate the above disadvantage and/or that will be a useful alternative to vehicle carriers and such methods known in the art.

### SUMMARY OF THE INVENTION

According to a first aspect of the invention, there is provided a vehicle body carrier according to claim 1. It comprises a carrier base having first engaging means for, in use, engaging part of a first vehicle body to secure it on the carrier base. The first vehicle body may be secured in an operatively horizontal position.

The vehicle body carrier includes a support arrangement extending operatively above the carrier base and having second engaging means for, in use engaging part of a second vehicle body to secure it on the support arrangement. The second vehicle body may be secured in an operatively inclined position at least partially above the first vehicle body.

The vehicle body carrier further includes a carrier extension member to which the support arrangement is attached and from which it protrudes in an operatively upwardly direction, the carrier extension member is pivotally connected to the carrier base wherein it is pivotally displaceable relative to the carrier base between a first, collapsed position, wherein it is located adjacent to, coplanar and in line with the carrier base, and a second, slanted position, wherein it extends at an acute angle to the carrier base. Preferably, the support arrangement may be removably attached to the carrier extension member.

The carrier extension member may include a pair of spaced apart arms which extend parallel to each other from a reminder of the carrier extension member and which arms are pivotally connected at respective free ends thereof to opposing sides of the carrier base to facilitate the pivot connection between the carrier extension member and carrier base.

The carrier extension member may be pivotally connected to the carrier base at a position intermediate opposing ends of the carrier base.

The support arrangement may include a first support including the second engaging means at an operatively upper end thereof, and a second support including the second engaging means at an operatively upper end thereof, the first support being higher than the second support.

Each of the first and second supports may include a pair of spaced apart operatively upwardly extending support members and a crossbar extending between free ends of the support members, and to which crossbar the second engaging means is attached. Preferably, the crossbar may be removably attached to the support members.

The first and second engaging means may be at least one or more engaging elements which are shaped and adapted such to be complementary to at least one or more co-operating formations in or on the first and second vehicle bodies. According to an example embodiment of the invention, the element may be in the form of at least one or any combination of a lug, stud, pin, hook, aperture, hole, slot, recess and the like and the formation may be in the form of at least one or any combination of an aperture, hole, slot, recess, lug, stud, pin, hook and the like.

The respective parts of the first and second vehicle bodies may be undersides and/or chassis of the respective first and second vehicle bodies.

According to a second aspect of the invention, there is provided a method of loading a vehicle body onto a vehicle body carrier according to claim 7, the method including the steps of:
- providing a vehicle body carrier as defined above;
- displacing the carrier extension member from its first, collapsed position to its second, slanted position;
- supporting the carrier extension member in its second, slanted position;
- lowering the second vehicle body, in a substantially horizontal orientation, onto the support arrangement such that part of the second vehicle body engages with the second engaging means to secure it in position on the supporting arrangement; and
- displacing the carrier extension member from its second, slanted position to its first, collapsed position so that the second vehicle body is supported on the support arrangement in an operatively inclined position.

There is provided for the carrier extension member to be supported in its second, slanted position by means of at least one or more support legs.

These and other features of the invention are described in more detail below.

### BRIEF DESCRIPTION OF THE DRAWINGS

One embodiment of the invention is described below, by way of a non-limiting example only, and with reference to the accompanying drawings wherein:
- Figure 1: is a perspective view, from a first angle, of a vehicle body carrier in accordance with the invention, with a carrier extension member thereof in a first, collapsed position;
- Figure 2: is a perspective view, from a second angle, of the vehicle body carrier of figure 1;
- Figure 3: is a similar view of the vehicle body carrier as shown in figure 1, with the carrier extension member in a second, slanted position;
- Figure 4: is a side view of the vehicle body carrier of figure 3, in use; and
- Figure 5: is a side view of the vehicle body carrier of figures 1 and 2, in use.

### DETAILED DESCRIPTION OF THE INVENTION

With reference to the drawings, a vehicle body carrier in accordance with the invention is generally indicated by reference numeral 10.

The carrier 10 includes a carrier base 12 which has first engaging means 14 for, in use, engaging an underside of a first vehicle body 16 to secure it on the carrier base 12 in an operatively horizontal position, and a support arrangement 18 which extends operatively above the carrier base 12. The support arrangement 18 includes second engaging means 20 for, in use, engaging part of a second vehicle body 22 to secure it on the support arrangement 18 in an operatively inclined position.

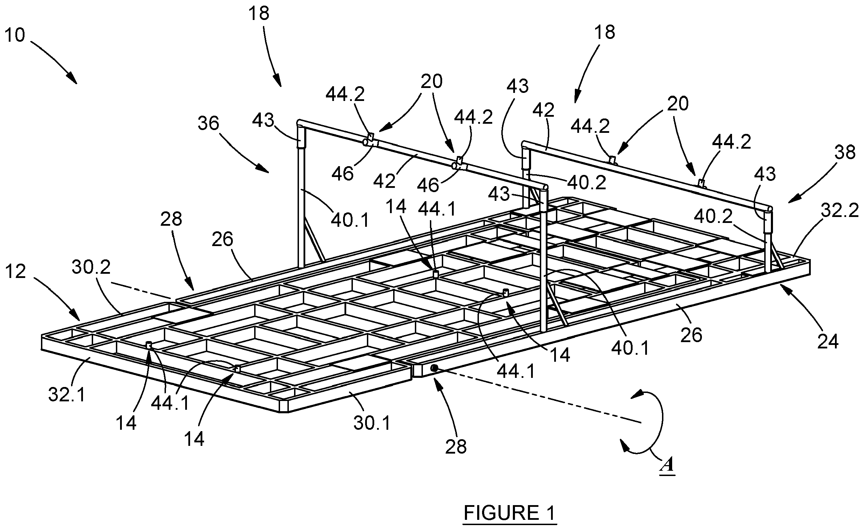

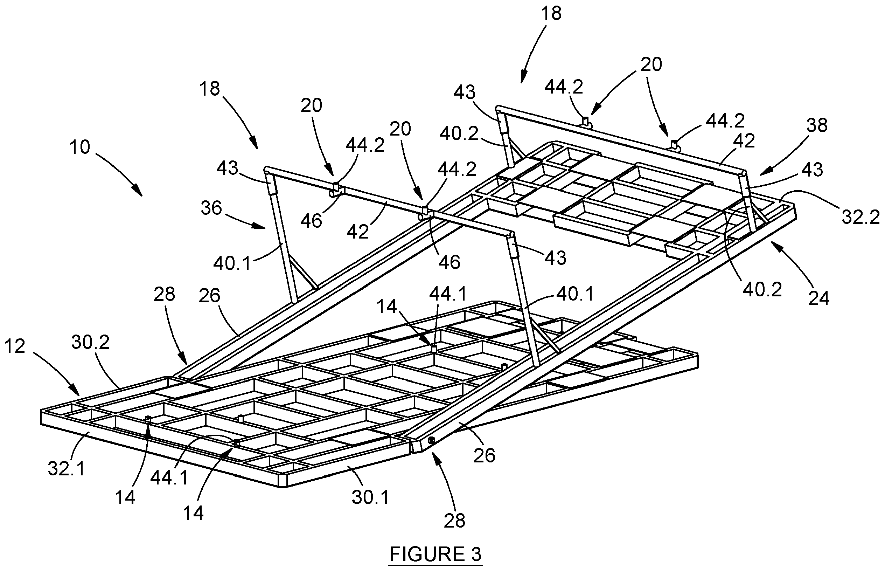

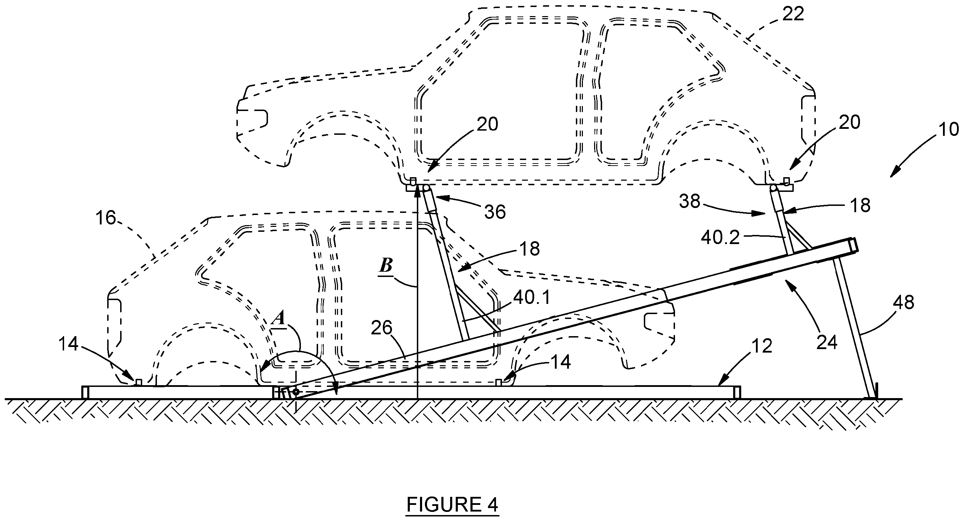

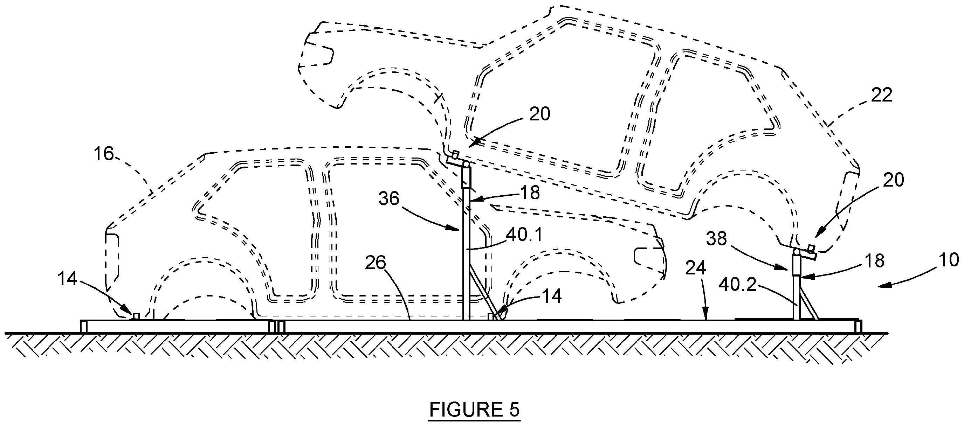

The vehicle body carrier 10 further includes a carrier extension member 24 which has a pair of spaced apart arms 26 which extend parallel to each other from a reminder of the extension member 24. At respective free ends 28 of the arms 26, the carrier extension member 24 is pivotally connected to opposing sides 30.1 and 30.2 of the carrier base 12 intermediate opposing ends 32.1 and 32.2 thereof. By being pivotally connected to the carrier base 12, the carrier extension member 24 is pivotally displaceable A about an operatively horizontal axis relative to the carrier base 12 between a first, collapsed position, wherein it is located adjacent to, in line and co-planar with the carrier base 12 (as shown in figures 1, 2 and 5), and a second, slanted position, wherein it extends at an acute angle to the carrier base 12 in side view (as shown in figures 3 and 4).

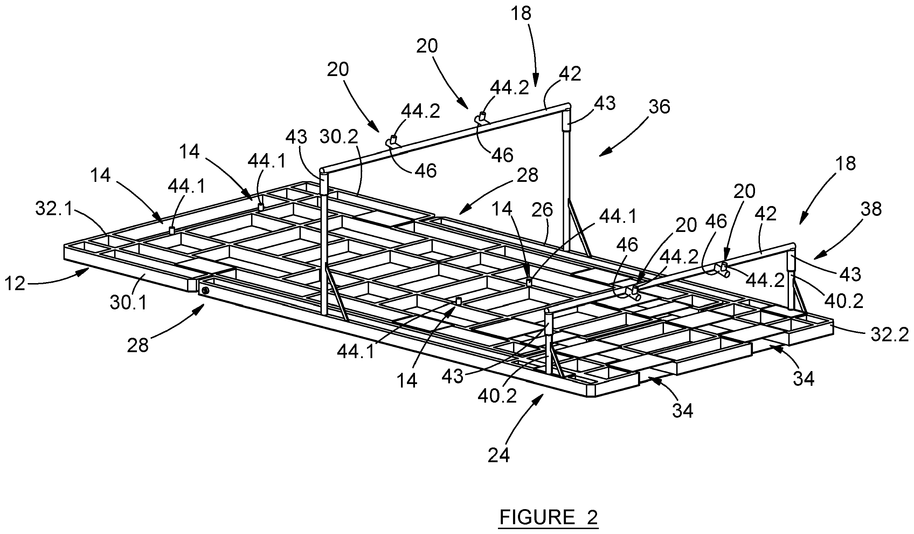

As is best shown in figure 2, the carrier extension member 24 includes cavities 34 for receiving, in use, forks of a forklift (not shown) for lifting the carrier 10, loading it into an intermodal container (not shown) and/or manipulating its position in the container. The cavities 34 also extend into the carrier base 12.

The support arrangement 18 is attached to and protrudes from the carrier extension member 24 in an operatively upwardly direction. The support arrangement 18 includes a first support 36 having the second engaging means 20 at an operatively upper end thereof, and a second support 38 including the second engaging means 20 at an operatively upper end thereof. The first support 36, which is spaced longitudinally along the carrier extension member 24 from the second support 38, is longer than the second support 38. Therefore, when the carrier extension member 24 is in its first, collapsed position, the first support 36 stands at a higher vertical distance B from the carrier base 12 than the second support 38.

Each of the first and second supports 36 and 38 includes a pair of spaced apart operatively upwardly extending support members 40.1 or 40.2. According to this example embodiment, the support members 40 are permanently attached to the carrier extension member 24, although in other embodiments of the invention the support members 40 could be removably attached to the carrier extension member 24. Support members 40.1, being part of the first support 36, are longer than support members 40.2, being part of the second support 38.

Each of the first and second supports 36 and 38 further includes a crossbar 42 which extends between free ends of the respective support members 40. The second engaging means 20 is attached to the crossbars 42. The crossbars 42 are removably attached to the support members 40 by having sleeves 43 at their opposing free ends extending laterally therefrom, which sleeves 43 are able to locate and slide over the free ends of the support members 40. In other embodiments of the invention, the crossbars 42 could be permanently attached to the relevant support members 40.

Each of the first and second engaging means 14 and 20 includes a plurality of engaging elements which, according to this example embodiment, is in the form of operatively upwardly extending pins 44.1 and 44.2. The pins 44 are shaped and adapted such to be complementary to at least one or more co-operating formations (not shown) in the vehicle bodies 16 and 22. According to this example embodiment, the co-operating formations are in the form of apertures which receives the pins 44 therein. The pins 44.1 of the first engaging means 14 protrude from the carrier base 12, and the pins 44.2 of the second engaging means 20 protrude from lugs 46 which are attached to the crossbars 42, as shown.

In use, the first vehicle body 16 is generally first loaded onto the carrier 10. This is performed by ensuring that the carrier extension member 24 is in its first, collapsed position. The first vehicle body 16 is then lowered, by whatever hoisting means, such as a crane, slings or forklift (not shown), in a substantially horizontal orientation onto the carrier base 12 so that the first engaging means 14 engages the underside of the first vehicle body 16 to secure it in position on the carrier base 12.

Referring particularly to figure 4, when loading the second vehicle body 22 onto the carrier 10, the support arrangement 18 is assembled by removably attaching the crossbars 42 between the respective support members 40.1 and 40.2 of each pair of support members.

The carrier extension member 24 is then displaced from its first, collapsed position to its second, slanted position wherein the respective crossbars 42 of the first and second supports 36 and 38 are positioned at roughly equal operatively vertical distances B from the carrier base 12. The carrier extension member 24 is supported in its second, slanted position by positioning at least one, but preferably two support legs 48 underneath it, as shown.

The second vehicle body 22 is then lowered, by whatever hoisting means, such as a crane or forklift (not shown), in a substantially horizontal orientation onto the support arrangement 18 so that the second engaging means 20 engages the underside of the second vehicle body 22 to secure it in position on the support arrangement 18.

Thereafter, the support legs 48 are removed from underneath the carrier extension member 24 and it is displaced from its second, slanted position to its first, collapsed position so that the second vehicle body 22 is supported on the support arrangement 18 in an inclined position.

The vehicle bodies 16 and 22 could be further secured to the carrier 10 by additional securing means (no shown) such as lashings, straps, fasteners, or the like.

When fully loaded, the vehicle body carrier 10 is self supporting, meaning that the vehicle bodies 16 and 22 could be pre-staged or even stored on the carrier 10 while awaiting loading into an intermodal container, for example.

As briefly explained above, when loading the fully loaded carrier 10 into a container, the carrier 10 is picked up, typically by a forklift, and loaded either into a grounded container or one that is on a truck chassis (not shown). This means the loaded carrier 10 could be driven into the container by the forklift and placed in position in the container, or it can be placed at a door end of the container and slid further into the container. Further loaded carriers could thereafter be slid in behind the first one, wherein a plurality of loaded carriers is positioned end-to-end inside the loaded container.

The unloading process is similar to the loading process discussed above. However, when loaded carriers are to be removed from a container located on a truck chassis, the carrier positioned closest to the door end of the container is removed first by a forklift. A rope or line (not shown) is then attached to the carrier being closest to the door end of the container and pulled to the door of the container from where the forklift can remove that carrier from the container. This process is repeated for the remaining carriers in the container.

It is envisaged that this invention provides a useful vehicle body carrier 10 that could be used for easily and conveniently transporting parts of vehicles such as semi-knocked-down vehicles or even assembled vehicles from one location to another during the vehicle manufacturing and/or assembly stages.

It will be appreciated by those skilled in the art that the invention is not limited to the precise details as described herein and that many variations are possible without departing from the scope of the appended claims. For example, the invention may incorporate further engaging means for engaging and securing the respective first and second vehicle bodies 16 and 22 to the vehicle body carrier 10, such as, for example, fasteners, straps, ropes and the like. Also, the first and second engaging means 14 and 20 could be easily adapted to engage any other part of the vehicle bodies 16 and 22, such as the chassis (not shown). Further, the engaging elements and co-operating formations could alternatively be in the form of any one or any combination of an aperture, hole, slot, recess, lug, stud, pin and hook. Still further, if required, one or more brace members (not shown) could be provided between the first and second supports 36 and 38 to afford further reinforcement to the support arrangement 18.

The description is presented in the cause of providing what is believed to be the most useful and readily understood description of the principles and conceptual aspects of the invention. In this regard, no attempt is made to show structural details of the invention in more detail than is necessary for a fundamental understanding of the invention.

## Claims

1. A vehicle body carrier (10) comprising:
- a carrier base (12) including first engaging means (14) for, in use, engaging part of a first vehicle body (16) to secure it on the carrier base (12) in an operatively horizontal position;
- a carrier extension member (24); wherein
- a support arrangement (18) is attached to and protrudes from the carrier extension member (24) in an operatively upwardly direction wherein it extends operatively above the carrier base (12), the support arrangement (18) including second engaging means (20) for, in use, engaging part of a second vehicle body (22) to secure it on the support arrangement (18) in an operatively inclined position at least partially above the first vehicle body (16), **characterised in that** the carrier extension member (24) is pivotally connected to the carrier base (12) wherein it is pivotally displaceable relative to the carrier base (12) between a first, collapsed position, wherein it is located adjacent to, in line and coplanar with the carrier base (12), and a second, slanted position, wherein it extends at an acute angle to the carrier base (12).

2. The carrier (10) according to claim 1, wherein the carrier extension member (24) includes cavities (34) for receiving, in use, forks of a forklift for lifting the carrier (10), loading it into an intermodal container and/or manipulating its position in the container, wherein the cavities also extend into the carrier base (12)..

3. The carrier (10) according to claim 1 or 2, wherein the carrier extension member (24) includes a pair of spaced apart arms (26) which extend parallel to each other from a remainder of the carrier extension member (24) and which arms (26) are pivotally connected at respective free ends (28) thereof to opposing sides (30) of the carrier base (12), intermediate its opposing ends (32), to facilitate the pivot connection between the carrier extension member (24) and carrier base (12).

4. The carrier (10) according to any one of the preceding claims, wherein the support arrangement (18) includes a first support (36) including the second engaging means (20) at an operatively upper end thereof, and a second support (38) that is spaced longitudinally from the first support (36) along the length of the extension member (24) and includes the second engaging means (20) at an operatively upper end thereof, the first support (36) being higher than the second support (38).

5. The carrier (10) according to claim 4, wherein each of the first (36) and second (38) supports includes a pair of spaced apart operatively upwardly extending support members (40) and a crossbar (42) extending between free ends of the support members (40), with the crossbar (42) including the second engaging means (20) attached to it.

6. The carrier (10) according to any one of the preceding claims, wherein the first (14) and second (20) engaging means include at least one or more engaging elements (44) which are shaped and adapted such to be complementary to at least one or more co-operating formations in or on the first (16) and second (22) vehicle bodies.

7. A method of loading a vehicle body onto a vehicle body carrier, the method including the steps of:
- providing a vehicle body carrier (10) according to claim 1,
- displacing the carrier extension member (24) from its first, collapsed position to its second, slanted position;
- supporting the carrier extension member (24) in its second, slanted position;
- lowering the second vehicle body (22), in a substantially horizontal orientation, onto the support arrangement (18) such that part of the second vehicle body (22) engages with the second engaging means (20) to secure it in position on the supporting arrangement (18); and
- displacing the carrier extension member (24) from its second, slanted position to its first, collapsed position so that the second vehicle body (22) is supported on the support arrangement (18) in an operatively inclined position.

## Patentansprüche

1. Fahrzeugkarosserieträger (10), mit:
- einer Trägerbasis (12), die eine erste Eingriffseinrichtung (14) umfasst, um bei Verwendung mit einem Teil einer ersten Fahrzeugkarosserie (16) in Eingriff zu kommen, um diese an der Trägerbasis (12) in einer betriebsmäßig horizontalen Position zu sichern;
- einem Trägererweiterungselement (24); wobei
eine Stützanordnung (18) an das Trägererweiterungselement (24) angebracht ist und von diesem in eine betriebsmäßig nach oben gerichtete Richtung vorsteht, wobei sich diese betriebsmäßig oberhalb der Trägerbasis (12) erstreckt, wobei die Stützanordnung (18) eine zweite Eingriffseinrichtung (20) umfasst, um bei Verwendung mit einem Teil einer zweiten Fahrzeugkarosserie (22) in Eingriff zu kommen, um diese an der Stützanordnung (18) in einer betriebsmäßig geneigten Position mindestens teilweise oberhalb der ersten Fahrzeugkarosserie (16) zu sichern,
**dadurch gekennzeichnet, dass** das Trägererweiterungselement (24) mit der Trägerbasis (12) schwenkbar verbunden ist, wobei es bezüglich der Trägerbasis (12) zwischen einer ersten, zusammengeklappten Position, in der es benachbart zu, in Linie und koplanar mit der Trägerbasis (12) gelegen ist, und einer zweiten, schräg gestellten Position schwenkbar verlagert werden kann, wobei es sich in einem spitzen Winkel zu der Trägerbasis (12) erstreckt.

2. Träger (10) gemäß Anspruch 1, wobei das Trägererweiterungselement (24) Hohlräume (34) umfasst, um bei Verwendung Gabeln eines Gabelstaplers zum Anheben des Trägers (10), Verladen dessen in einen intermodalen Behälter und/oder Manipulieren von dessen Position in dem Behälter aufzunehmen, wobei sich die Hohlräume auch in die Trägerbasis (12) erstrecken.

3. Träger (10) gemäß Anspruch 1 oder 2, wobei das Trägererweiterungselement (24) ein Paar mit Abstand einzeln angeordnete Arme (26) umfasst, die sich parallel zueinander von einem Rest des Trägererweiterungselements (24) erstrecken, und diese Arme (26) an deren jeweiligen freien Enden (28) mit entgegengesetzten Seiten (30) der Trägerbasis (12) zwischen deren entgegengesetzten Enden (32) liegend schwenkbar verbunden sind, um die Schwenkverbindung zwischen dem Trägererweiterungselement (24) und der Trägerbasis (12) zu ermöglichen.

4. Träger (10) gemäß einem der vorhergehenden Ansprüche, wobei die Stützanordnung (18) eine erste Stütze (36), die die zweite Eingriffseinrichtung (20) an deren betriebsmäßig oberen Ende umfasst, und eine zweite Stütze (38) umfasst, die in Längsrichtung von der ersten Stütze (36) entlang der Länge des Erweiterungselements (24) mit Abstand angeordnet ist und die zweite Eingriffseinrichtung (20) an deren betriebsmäßig oberen Ende umfasst, wobei die erste Stütze (36) höher als die zweite Stütze (38) ist.

5. Träger (10) gemäß Anspruch 4, wobei jede der ersten (36) und zweiten (38) Stütze ein Paar mit Abstand einzeln angeordnete betriebsmäßig sich nach oben gerichtet erstreckende Stützelemente (40) und einen sich zwischen freien Enden der Stützelemente (40) erstreckenden Querträger (42) umfasst, wobei der Querträger (42) die an diesem angebrachte zweite Eingriffseinrichtung (20) umfasst.

6. Träger (10) gemäß einem der vorhergehenden Ansprüche, wobei die erste (14) und zweite (20) Eingriffseinrichtung mindestens ein oder mehrere Eingriffselemente (44) umfasst, die derart geformt und angepasst sind, um auf mindestens eine oder mehrere zusammenarbeitende Ausbildungen in oder an der ersten (16) und zweiten (22) Fahrzeugkarosserie abgestimmt zu sein.

7. Verfahren eines Ladens einer Fahrzeugkarosserie auf einen Fahrzeugkarosserieträger, wobei das Verfahren die folgenden Schritte umfasst:
- Bereitstellen eines Fahrzeugkarosserieträgers (10) gemäß Anspruch 1,
- Verlagern des Trägererweiterungselements (24) von dessen ersten, zusammengeklappten Position zu dessen zweiten, schräg gestellten Position;
- Stützen des Trägererweiterungselements (24) in dessen zweiten, schräg gestellten Position;
- Absenken der zweiten Fahrzeugkarosserie (22) in einer im Wesentlichen horizontalen Ausrichtung auf die Stützanordnung (18) derart, dass ein Teil der zweiten Fahrzeugkarosserie (22) mit der zweiten Eingriffseinrichtung (20) in Eingriff kommt, um diese in Position an der stützenden Anordnung (18) zu sichern; und
- Verlagern des Trägererweiterungselements (24) von dessen zweiten, schräg gestellten Position zu dessen ersten, zusammengeklappten Position, sodass die zweite Fahrzeugkarosserie (22) an der Stützanordnung (18) in einer betriebsmäßig geneigten Position gestützt ist.

## Revendications

1. Support de carrosserie de véhicule (10), comprenant :
- une base de support (12), comportant des premiers moyens d'engagement (14) destinés à s'engager, en cours d'utilisation, avec une partie d'une première carrosserie de véhicule (16) pour fixer celle-ci sur la base de support (12) dans une position fonctionnellement horizontale ;
- un élément d'extension de support (24) ; dans lequel un agencement de support (18) est fixé à l'élément d'extension de support (24) et fait saillie de celui-ci dans une direction fonctionnellement vers le haut dans laquelle il s'étend fonctionnellement au-dessus de la base de support (12), l'agencement de support (18) comprenant des deuxièmes moyens d'engagement (20) destinés à s'engager, en cours d'utilisation, avec une partie d'une deuxième carrosserie de véhicule (22) afin de fixer celle-ci sur l'agencement de support (18) dans une position fonctionnellement inclinée au moins en partie au-dessus de la première carrosserie de véhicule (16), **caractérisé en ce que** l'élément d'extension de support (24) est relié de manière pivotante à la base de support (12) dans laquelle il peut être déplacé de manière pivotante par rapport à la base de support (12) entre une première position repliée, dans laquelle il est situé de manière adjacente à la base de support (12), en alignement et de manière coplanaire avec celle-ci, et une deuxième position inclinée dans laquelle il s'étend en formant un angle aigu avec la base de support (12).

2. Support (10) selon la revendication 1, dans lequel l'élément d'extension de support (24) comprend des cavités (34) destinées à recevoir, en cours d'utilisation, des fourches d'un chariot élévateur à fourche destiné à soulever le support (10), le charger dans un conteneur intermodal et/ou manipuler sa position dans le conteneur, dans lequel les cavités s'étendent également à l'intérieur de la base de support (12).

3. Support (10) selon la revendication 1 ou 2, dans lequel l'élément d'extension de support (24) comprend une paire de bras espacés (26) qui s'étendent parallèlement l'un à l'autre depuis le reste de l'élément d'extension de support (24), lesquels bras (26) sont reliés de manière pivotante, au niveau de leurs extrémités libres respectives (28), à des côtés opposés (30) de la base de support (12), entre ses extrémités opposées (32), afin de faciliter la liaison à pivotement entre l'élément d'extension de support (24) et la base de support (12).

4. Support (10) selon l'une quelconque des revendications précédentes, dans lequel l'agencement de support (18) comprend un premier support (36) comportant les deuxièmes moyens d'engagement (20) au niveau de son extrémité fonctionnellement supérieure, et un deuxième support (38) qui est espacé longitudinalement du premier support (36) sur la longueur de l'élément d'extension (24) et comprend les deuxièmes moyens d'engagement (20) au niveau de son extrémité fonctionnellement supérieure, le premier support (36) étant plus élevé que le deuxième support (38).

5. Support (10) selon la revendication 4, dans lequel chacun des premier (36) et deuxième (38) supports comprend une paire d'éléments de support espacés (40) s'étendant fonctionnellement vers le haut et une barre transversale (42) s'étendant entre des extrémités libres des éléments de support (40), avec la barre transversale (42) comprenant les deuxièmes moyens d'engagement (20) fixés à celui-ci.

6. Support (10) selon l'une quelconque des revendications précédentes, dans lequel les premiers (14) et deuxièmes (20) moyens d'engagement comprennent au moins un élément d'engagement (44) qui est formé et adapté de manière à être complémentaire d'au moins une formation coopérante dans ou sur les première (16) et deuxième (22) carrosseries de véhicule.

7. Procédé de chargement d'une carrosserie de véhicule sur un support de carrosserie de véhicule, le procédé comprenant les étapes suivantes :
- fournir un support de carrosserie de véhicule (10) selon la revendication 1,
- déplacer l'élément d'extension de support (24) de sa première position repliée vers sa deuxième position inclinée ;
- supporter l'élément d'extension de support (24) dans sa deuxième position inclinée ;
- abaisser la deuxième carrosserie de véhicule (22), dans une orientation sensiblement horizontale, sur l'agencement de support (18) de sorte qu'une partie de la deuxième carrosserie de véhicule (22) s'engage avec les deuxièmes moyens d'engagement (20) pour fixer celle-ci en position sur l'agencement de support (18) ; et
- déplacer l'élément d'extension de support (24) de sa deuxième position inclinée vers sa première position repliée de sorte que la deuxième carrosserie du véhicule (22) soit supportée par l'agencement de support (18) dans une position fonctionnellement inclinée.
